# EUROPEAN PATENT APPLICATION

(11) **EP 4 707 657 A1**
(43) Date of publication of application: **11.03.2026**
(21) Application number: 24198775.9
(22) Date of filing: 05.09.2024
(51) Int. Cl.: F16L 57/04, A62C 3/16, H02G 3/04

(54) **METHOD OF PROTECTING AN OBJECT IN AN ENCLOSURE AGAINST FIRE**

(71) Applicant: Favuseal AS, 1351 Rud (NO)
(72) Inventor: Schlytter-Henrichsen, Christian, 1388 Borgen (NO)
(74) Representative: Plougmann Vingtoft a/s

(57) **Abstract**

The invention relates to a method of protecting at least one object (1) arranged in an enclosure (2) against fire. The at least one object (1) is placed on a carrying surface (7). An upper layer (5) of fire protective material is arranged resting on the at least one object. The upper layer has a width that is smaller than a horizontal distance between side walls (2b) of the enclosure so that there is a gap (G) between the upper layer and the side walls and so large that side regions (5a) of the upper layer extend laterally beyond the at least one object at both sides thereof by an amount corresponding to at least a vertical distance between the upper layer and the carrying surface. The fire protective material of the upper layer has a softening temperature above which the side regions bend downwards by gravity, the softening temperature being lower than a critical threshold temperature (T_{c}) of the at least one object to be protected.

## Description

### FIELD OF THE INVENTION

The present invention relates to a method of protecting an object arranged in an enclosure against fire. The invention can be applied e.g. for passive fire protection of cables in a cable tray against hydrocarbon fire and jet fire.

### BACKGROUND OF THE INVENTION

Passive fire protection is used to protect objects against fire and are intended to contain fire and/or retard spreading of the fire. The present invention has been developed in relation to objects in the form of cables or small-bore tubing which are installed at a location where a damage or malfunctioning of the object as a result of a possible fire would be critical for the operation of a system comprising or connected to the object.

In general, passive fire protection may use structural components such as fire-resistant walls, floors, and doors, or be in the form of e.g. an insulating layer of mineral fibres which will delay the heat from the fire in reaching the protected object on the "cold" side of the insulating layer.

In relation to the fire protection of objects arranged in an enclosure, such as cables in a cable tray, they are typically protected by wrapping bands or sheets of mineral fibres around the enclosure. The thickness of this type of fire protective material is typically in the order of 70-80 mm to provide sufficient fire protection. Therefore, the fire protection takes up a large amount of space and can be difficult to arrange, especially when the available space is limited. It will also be cumbersome to temporarily remove the fire protective material, if the object needs to be inspected, repaired, or replaced. Furthermore, the same applies if it becomes relevant to arrange additional cables in the same enclosure after a period of operation.

### OBJECT OF THE INVENTION

It is an object of the present invention to provide a method of protecting an object arranged in an enclosure against fire, which method provides passive fire protection.

It is another object of the present invention to provide a method of protecting an object arranged in an enclosure against fire, which method can be applied in a simple and efficient manner.

It is an object of at least some embodiments of the present invention to provide a method of protecting an object arranged in an enclosure against fire, with which method it is easy to inspect the object after a period of use.

It is another object of at least some embodiments of the present invention to provide a method of protecting an object arranged in an enclosure against fire, with which method it is easy to re-arrange the object or to change the number of objects in the enclosure.

It is a further object of the present invention to provide an alternative to the prior art.

### SUMMARY OF THE INVENTION

The above-described object and several other objects are intended to be obtained in a first aspect of the invention by providing a method of protecting at least one object arranged in an enclosure against fire, the method comprising:
- providing the enclosure having at least a bottom wall and two side walls forming an inner space,
- placing the at least one object in the enclosure on a carrying surface, and
- arranging an upper layer of fire protective material resting on the at least one object, the upper layer having a width that is:
   - smaller than a horizontal distance between the side walls so that there is a gap between the upper layer and the side walls, and
   - so large that side regions of the upper layer extend laterally beyond the at least one object at both sides thereof by an amount corresponding to at least a vertical distance between the upper layer and the carrying surface,
   wherein the fire protective material of the upper layer has a softening temperature above which the side regions of the upper layer bend downwards by gravity, the softening temperature being lower than a critical threshold temperature of the at least one object to be protected.

The upper layer is preferably provided as a planar element having a stiffness high enough to allow it to remain on top of the at least one object at the temperatures of normal operation of the at least one object. This means that when there is a plurality of objects of the same size or one object with a constant height, the upper layer will be arranged in a plane parallel to the carrying surface.

Preferably, the wording that the upper layer is resting on the at least one object means that it is resting directly thereon. However, the scope of protection also covers embodiments in which one or more further layers or elements are arranged between the at least one object and the upper layer.

Preferably, the wording "an upper layer" does not exclude that there is more than one upper layer.

By "laterally" is meant in a direction towards the side walls. This will be shown in the figures.

A technical effect of the width of the upper layer being as described above is that the laterally extending side regions of the upper layer can bend unhindered downwards when the temperature in the inner space reaches the softening temperature above which the stiffness of the upper layer decreases sufficiently to make this happen. Hereby the object will become covered and thereby protected by the fire protective material at higher temperatures. This effect will be illustrated in the figures.

In some embodiments of the invention, the method further comprises, before placing the at least the one object, arranging a lower layer of fire protective material in the inner space on the bottom wall so that the at least one object is placed on the lower layer, the lower layer comprising the carrying surface. Hereby the object will become encapsulated by the fire protective material at high temperatures whereby the protection is further improved compared to embodiments without such a lower layer.

In an alternative to the first aspect of the invention, the above-described objects and several other objects are intended to be obtained in a second aspect of the invention by providing a method of protecting at least one object arranged in an enclosure against fire, the method comprising:
- providing the enclosure having at least a bottom wall and two side walls forming an inner space,
- providing a profile of fire protective material with a lower layer and two side layers extending upwardly at side regions of the lower layer,
- placing the at least one object in the enclosure on the lower layer, the lower layer comprising the carrying surface, and
- arranging an upper layer of fire protective material resting on the upwardly extending side layers or on the at least one object.

In such embodiments, the at least one object may be better protected from sudden temperature increases, because the encapsulation is present all the time and not only above the softening temperature of the fire protective material. Such embodiments may also be used with fire protective material that does not become soft and deform at high temperatures. Furthermore, since these embodiments are not dependent on deformation of the fire protective material due to gravity at increased temperatures, they may be more efficient for other angles of orientation than horizontal.

On the other hand, an advantage of a method according to the first aspect of the invention is that it only requires plane layers of fire protective material which are typically easier to manufacture, store, and transport than what is used in a method according to the second aspect of the invention. Furthermore, it is easier to adapt to different sizes of objects, because a plane upper layer can be used to protect any size of objects as long as the width of the upper layer is sufficiently large.

In embodiments according to the second aspect of the invention, the side layers may be straight and extend at an angle of 30-135°, such as 45-110° relative to the lower layer. Alternatively, they may be curved. The vertical dimension of the side layers is determined to be at least of the same size as the at least one object to be protected.

In both the first and the second aspects of the invention, the upper layer of fire protective material may be arranged to rest loosely on:
- the at least one object, or
- the upwardly extending side layers, when present.

By "rest loosely" is preferably meant that it is arranged without being fastened thereto so that it is held in place by gravity. An advantage of thereof is that it is easy to gain access to the at least one object e.g. for inspection or if an additional object is to be added. Alternatively, the upper layer is fastened to the at least one object and/or to the upwardly extending side layers. Such fastening may e.g. be done by gluing.

The enclosure may be rectangular with the bottom wall forming one side of the rectangle and the two side walls forming two other sides of the rectangle. Such an embodiment may e.g. be a cable tray as will be illustrated in the figures.

The enclosure may further comprise a top wall extending between the side walls so that the enclosure forms a closed inner space. By "closed" is meant that the walls of the enclosure surround the at least one object when seen in a cross-sectional view perpendicular to the longitudinal extension of the at least one object. The enclosure may still be open at the ends e.g. to allow for entry and exit of the objects when they also extend away from the enclosure.

Alternatively to being rectangular, the enclosure may form a closed inner space with a curved, such as circular or oval, cross-sectional shape. In such embodiments, a part of the curved wall would be referred to as the bottom wall, and opposed parts of the curved wall would be referred to as the side walls.

The at least one object may a plurality of objects arranged side-by-side, possibly with gaps between neighbouring objects. An example of such an embodiment will be shown in the figures.

In some embodiments of the invention, the enclosure is at least partly, such as fully, surrounded by an outer layer of fire protective material. Hereby a higher degree of fire protection is obtained.

The fire protective material may contain an active substance which will:
- at a first elevated temperature, swell and undergo a first endothermic process during which water is released and evaporated, and
- at a second elevated temperature higher than the first elevated temperature, undergo a second endothermic process during which a physically and thermally stable fire barrier is created.

During the first endothermic process, "trapped" water is released, and possibly evaporated, resulting in a cooling effect towards the at least one object to be protected. As this reaction is extremely energy demanding, the heat from the fire will be consumed by the endothermic process and thereby delay the increase in the temperature of the object. The thermally stable substance should be recognized by having a very low thermal conductivity, and as a result, it will delay the heat penetration considerably in time and thereby yield further protection against damage of the at least one object. The active substance may be a thermoplastic compound containing inorganic fillers in a binder composed of a co-polymer, such as an ethylene co-polymer. Such a technology has proven to be robust to weathering conditions over time and fluctuations in temperature. In addition, a thermoplastic compound will yield ongoing protection and will not crack over time, consequently, yielding ongoing protection.

In any of the embodiments as described above, at least some, such as all, of the fire protective material has been manufactured by extrusion. Such extruded profiles may be easier to handle than other types of fire protective material provided e.g. as tape that has to be wound around the objects to the be protected and/or the enclosure.

In some embodiments of the invention, the at least one object is at least one electric cable, and the enclosure is a cable tray.

In other embodiments of the invention, the at least one object is small-bore tubing. For such embodiments, the enclosure may e.g. be a tray, a duct, or any structural element configured to enclose a small-bore tubing.

In any of the embodiments of the invention, the enclosure may be provided with ventilation openings, such as grids, to ensure sufficient cooling of the at least one object. This will be particularly relevant for objects that may produce heat during use, such as electrical cables. In such embodiments comprising an outer layer of fire protective material, it may also be relevant to provide ventilation openings in the outer layer.

In any of the embodiments of the invention, the different layers of fire protective material may be the same, or the layers may be made from different materials.

In a third aspect, the invention relates to a kit of layers and/or profiles of fire protective material configured for use in a method according to the first aspect of the invention.

The first, second, and third aspects of the present invention may each be combined. Thus, the features described for the first and second aspects of the invention also apply to the third aspect. These and other aspects of the invention will be apparent from and elucidated with reference to the embodiments described hereinafter.

### BRIEF DESCRIPTION OF THE FIGURES

The method of protecting at least one object arranged in an enclosure against fire according to the invention will now be described in more detail with regard to the accompanying figures. The figures show one way of implementing the present invention and is not to be construed as being limiting to other possible embodiments falling within the scope of the attached claim set.
Figure 1 schematically shows an embodiment of the invention in which four cables are arranged in a cable tray, and wherein the upper layer of fire protective material rests loosely on the cables.
Figure 2 schematically shows the embodiment in figure 1 at temperatures above the softening temperature of the fire protective material.
Figure 3 shows an alternative embodiment in which the fire protective material is provided in the form of a profile having a lower layer and two side layers extending upwardly at side regions of the lower layer. An upper layer of fire protective material is arranged to rest on the upwardly extending side layers.
Figure 4 schematically shows a three-dimensional view of another embodiment of the invention resembling the one in figure 1.
Figure 5 schematically shows an embodiment of the invention in which the enclosure has an oval cross-sectional shape.

### DETAILED DESCRIPTION OF AN EMBODIMENT

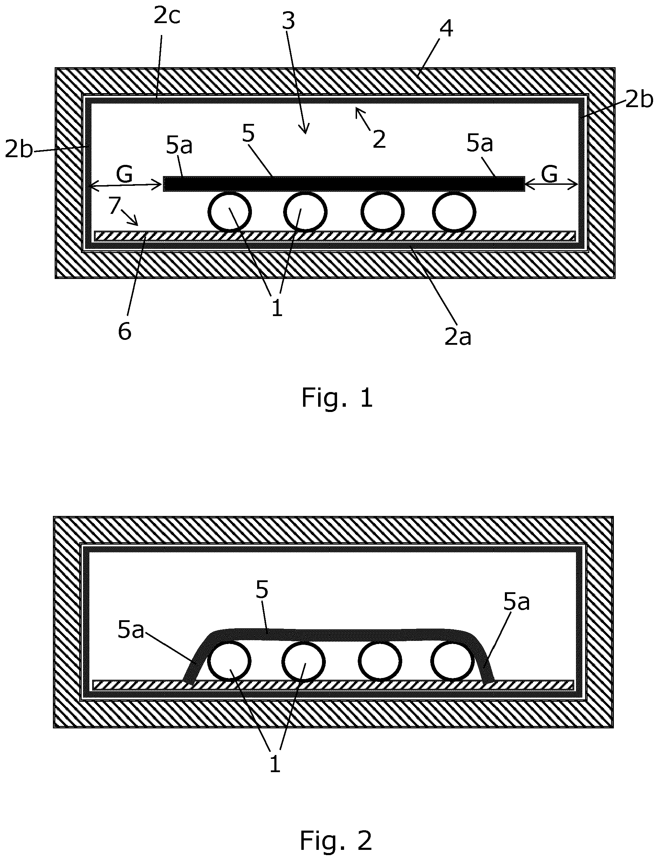

In the following description of the invention, reference will be made to the at least one object 1 being a row of cables arranged in a cable tray 2. However, a corresponding description could be made in relation to small-bore tubing. The cables 1 are shown as arranged side-by-side with gaps between neighbouring cables, but they could also be arranged close to each other. Figure 1 schematically shows an embodiment of the invention in which the enclosure 2 has a bottom wall 2a, two side walls 2b, and a top wall 2c extending between the side walls 2b so that the enclosure 2 forms a closed inner space 3. In the illustrated embodiment, the enclosure 2 is fully surrounded by an outer layer 4 of fire protective material. This outer layer 4 may be the same as the upper layer 5, which is arranged resting on the cables 1, or it may be another type. In figure 1, a lower layer 6 of fire protective material is arranged in the inner space 3 on the bottom wall 2a so that the cables 1 are placed on the lower layer 6, the lower layer 6 comprising the carrying surface 7. In embodiments without a lower layer, the upper surface of the bottom wall 2a will comprise the carrying surface 7. As described above, the upper layer 5 may be resting loosely on the cables 1. The upper layer 5 has a width that is:
- smaller than a horizontal distance between the side walls so that there is a gap G between the upper layer 5 and the side walls 2b, and
- so large that side regions 5a of the upper layer 5 extend laterally beyond the at least one object 1 at both sides thereof by an amount corresponding to at least a vertical distance between the upper layer 5 and the carrying surface 7.

Figure 2 schematically shows the embodiment in figure 1 when exposed to high temperatures caused by a fire. The fire protective material of the upper layer 5 has a softening temperature above which the side regions 5a of the upper layer 5 bend downwards by gravity as shown in figure 2. The total of the lower layer 6 and the deformed upper layer 5 of fire protective material together form an encapsulation of the cables 1 and thereby protect them against critical temperatures. The softening temperature should be lower than a critical threshold temperature T_{c} of the at least one object 1 to be protected so that the side regions 5a have provided the sideways protection before the cables 1 get damaged. In figure 2, the deformation of the upper layer 5 is shown to have taken place only at the side regions 5a. In practice, there will typically also be some deformation at the regions between the cables 1, depending on the distance therebetween.

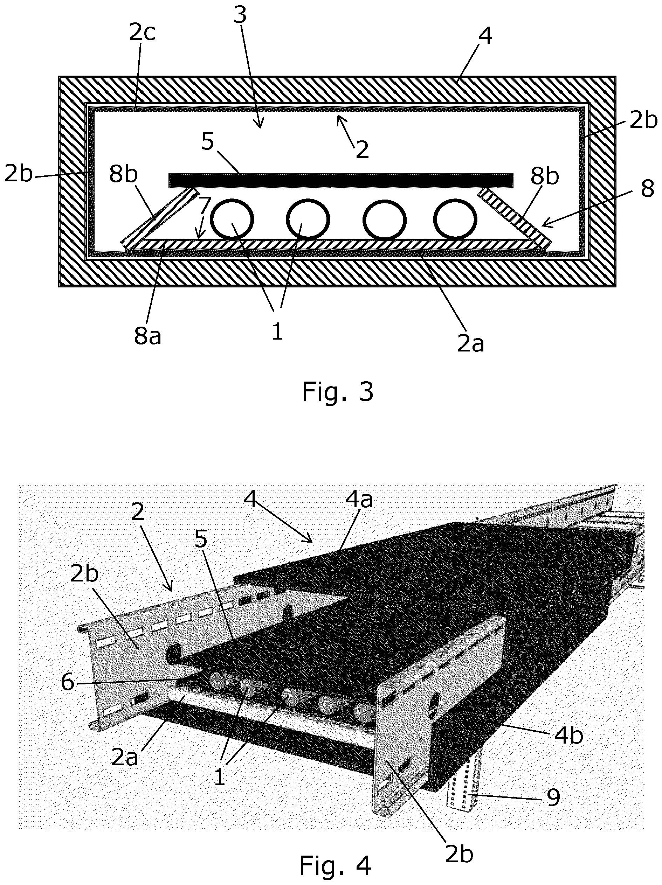

Figure 3 schematically shows an alternative embodiment of the invention. It resembles the embodiment of figures 1 and 2 in that four cables 1 are arranged in an enclosure 2 having a bottom wall 2a, two side walls 2b, and a top wall 2c extending between the side walls 2b so that the enclosure 2 forms a closed inner space 3. A profile 8 of fire protective material is provided, the profile 8 having a lower layer 8a and two side layers 8b extending upwardly at side regions of the lower layer 8a. The cables 1 are placed on the lower layer 8a, the lower layer 8a comprising the carrying surface 7. An upper layer 5 of fire protective material is arranged to rest on the upwardly extending side layers 8b. In the illustrated embodiment, the side layers 8b are straight and extend at an angle of approximately 45° relative to the lower layer 8a, but these angles could be different.

Figure 4 schematically and in three-dimensional view shows an embodiment of the invention resembling the one in figure 1 except that the cable tray 2 does not have a top wall. The bottom wall 2a and the side walls 2b of the cable tray 2 forming the enclosure 2 are made from extruded profiles. They are shown to be supported by carrying profiles 9, but other different possible arrangements of cable trays will be known to a person working within this technical field. In this embodiment, the outer layer 4 of fire protective material is provided as two extruded profiles 4a,4b which can easily be arranged around the lower and upper part, respectively, of the enclosure 2. The outer layer 4 of fire protective material can be fastened e.g. by rivets, screws, or metallic bands. The outer layer may also be fastened by use of an additional external wrapping system which may furthermore provide different properties like aesthetic properties, such as colour or technical information, and/or technical properties, such as cleanability, ease of decontamination, mechanical protection, or chemical protection. Such an additional external wrapping system may e.g. be mechanically fastened, glued together, or fastened by mechanically self-locking means.

In test performed during the development of the present invention it was found that in this way, the traditionally used 70-80 mm thick mineral wool could be replaced by 10 mm of fire protective material in the form of a material which contains an active substance which will:
- at a first elevated temperature, swell and undergo a first endothermic process during which water is released and evaporated, and
- at a second elevated temperature higher than the first elevated temperature, undergo a second endothermic process during which a physically and thermally stable fire barrier is created. The test set-up resembled the one in figure 4. As a rough estimate, a fire would typically result in a temperature in the order of 1000 degrees Celsius, and the resulting temperature in the inner space 3 of the cable tray 2 protected by the outer layer 4 of fibre protective material would after a period of time be in the order of 500 degrees Celsius. For the fire protective material tested, the softening temperature was around 140 degrees Celsius meaning that the side regions 5a of the upper layer would have bent down, as shown in figure 2, well before the temperature in the inner space reached the 500 degrees Celsius. This would further delay the increase in temperature of the cables 1 thereby providing the required protection.

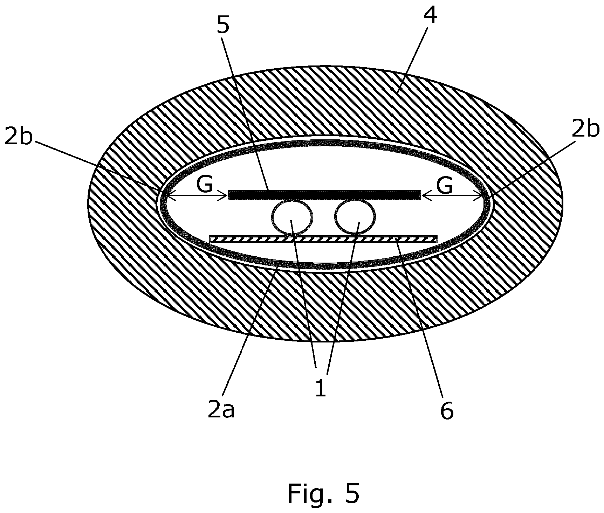

Figure 5 schematically shows an embodiment of the invention in which the at least one object is a plurality of small-bore tubing 1 arranged in a duct of oval cross-section. The figure illustrates a design resembling the one in figure 1, and the details described for figure 1 also applies to figure 5 except for the geometry of the enclosure. As shown in figure 5, a part of the curved wall would be referred to as the bottom wall 2a, and opposed parts of the curved wall would be referred to as the side walls 2b. In the figure, the lower layer 6 is shown as a straight plate or sheet of fire protective material. However, it may also be curved, such as following the curvature of the bottom wall 2a of the enclosure. The outer layer 4 in this figure is relatively thick compared to what would typically be necessary.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Method of protecting at least one object (1) arranged in an enclosure (2) against fire, the method comprising:
- providing the enclosure (2) having at least a bottom wall (2a) and two side walls (2b) forming an inner space (3),
- placing the at least one object (1) in the enclosure (2) on a carrying surface (7), and
- arranging an upper layer (5) of fire protective material resting on the at least one object (1), the upper layer (5) having a width that is:
- smaller than a horizontal distance between the side walls (2b) so that there is a gap (G) between the upper layer (5) and the side walls (2b), and
- so large that side regions (5a) of the upper layer (5) extend laterally beyond the at least one object (1) at both sides thereof by an amount corresponding to at least a vertical distance between the upper layer (5) and the carrying surface (7),
wherein the fire protective material of the upper layer (5) has a softening temperature above which the side regions (5a) of the upper layer (5) bend downwards by gravity, the softening temperature being lower than a critical threshold temperature (T_{c}) of the at least one object (1) to be protected.

2. Method according to claim 1, further comprising, before placing the at least the one object, arranging a lower layer (6) of fire protective material in the inner space (3) on the bottom wall (2a) so that the at least one object (1) is placed on the lower layer (6), the lower layer (6) comprising the carrying surface (7).

3. Method of protecting at least one object (1) arranged in an enclosure (2) against fire, the method comprising:
- providing the enclosure (2) having at least a bottom wall (2a) and two side walls (2b) forming an inner space (3),
- providing a profile (8) of fire protective material with a lower layer (8a) and two side layers (8b) extending upwardly at side regions of the lower layer (8a),
- placing the at least one object (1) in the enclosure (2) on the lower layer (8a), the lower layer (8a) comprising the carrying surface (7), and
- arranging an upper layer (5) of fire protective material resting on the upwardly extending side layers (8b) or on the at least one object (1).

4. Method according to claim 3, wherein the side layers (8b) are straight and extend at an angle of 30-135°, such as 45-110° relative to the lower layer (8a).

5. Method according to any of the preceding claims, wherein the upper layer (5) of fire protective material is arranged to rest loosely on:
- the at least one object (1), or
- the upwardly extending side layers (8b), when present.

6. Method according to any of the preceding claims, wherein the enclosure is rectangular with the bottom wall (2a) forming one side of the rectangle and the two side walls (2b) forming two other sides of the rectangle.

7. Method according to any of the preceding claims, wherein the enclosure (2) further comprises a top wall (2c) extending between the side walls (2b) so that the enclosure (2) forms a closed inner space (3).

8. Method according to any of claims 1-5, wherein enclosure forms a closed inner space with a curved, such as circular or oval, cross-sectional shape.

9. Method according to any of the preceding claims, wherein the at least one object (1) is a plurality of objects (1) arranged side-by-side, possibly with gaps between neighbouring objects (1).

10. Method according to any of the preceding claims, wherein the enclosure (2) is at least partly, such as fully, surrounded by an outer layer (4) of fire protective material.

11. Method according to any of the preceding claims, wherein the fire protective material contains an active substance which will:
- at a first elevated temperature, swell and undergo a first endothermic process during which water is released and evaporated, and
- at a second elevated temperature higher than the first elevated temperature, undergo a second endothermic process during which a physically and thermally stable fire barrier is created.

12. Method according to any of the preceding claims, wherein at least some, such as all, of the fire protective material has been manufactured by extrusion.

13. Method according to any of the preceding claims, wherein the at least one object (1) is at least one electric cable, and wherein the enclosure (2) is a cable tray.

14. Method according to any of claims 1-12, wherein the at least one object (1) is small-bore tubing.

15. Kit of layers and/or profiles of fire protective material configured for use in a method according to any of the preceding claims.
